# EUROPEAN PATENT APPLICATION

(11) **EP 4 852 474 A1**
(43) Date of publication of application: **09.12.2026**
(21) Application number: 25867302.9
(22) Date of filing: 16.07.2025
(51) Int. Cl.: H04W 4/80

(54) **SHORT-RANGE PASSIVE DATA COMMUNICATION METHOD AND SYSTEM FOR DEVICE, STORAGE MEDIUM, AND DEVICE**

(30) Priority: 31.03.2025 CN 202510397369
(71) Applicant: Suzhou Qiancheng New Energy Technology Co., Ltd., Suzhou, Jiangsu 215101 (CN)
(72) Inventor: DING, Jiajie, Suzhou Jiangsu 215101 (CN); DONG, Miao, Suzhou Jiangsu 215101 (CN); TIAN, Kang, Suzhou Jiangsu 215101 (CN); YANG, Xinghua, Suzhou Jiangsu 215101 (CN); MA, Jie, Suzhou Jiangsu 215101 (CN); XIAO, Liujie, Suzhou Jiangsu 215101 (CN)
(74) Representative: Bayramoglu et al.
(86) International application number: PCT/CN2025/108866
(87) International publication number: WO 2026/208042

(57) **Abstract**

This application discloses a short-range passive data communication method and system for a device, a storage medium, and the device. The method includes: configuring a short-range passive communication apparatus for a target device, where the short-range passive communication apparatus includes a memory and a short-range passive communication module; monitoring, based on working data of the target device, whether the target device meets a preset short-range storage condition; storing, when it is detected that the preset short-range storage condition is met, the working data into the memory; and when the short-range passive communication module is scanned by a corresponding reader/writer, obtaining, by the short-range passive communication module, energy from a radio frequency field emitted by the reader/writer, and transmitting, by using the obtained energy, data stored in the memory to the reader/writer. In this application, a short-range passive communication module can obtain energy from a radio frequency field of a reader/writer, thus requiring no external power and achieving true passive communication.

## Description

### TECHNICAL FIELD

This application relates to the field of data transmission technologies, and in particular, to a short-range passive data communication method and system for a device, a storage medium, and the device.

### BACKGROUND

With rapid development of renewable energy, energy devices such as a photovoltaic inverter and a photovoltaic hybrid energy storage inverter play an increasingly important role in a power system. Efficient running and reliable monitoring of these devices are essential to ensure stability and safety of energy supply. To achieve this objective, application of data communication and interaction technologies in these energy devices becomes particularly important.

Currently, data communication and interaction methods for the energy devices such as the photovoltaic inverter and the photovoltaic hybrid energy storage inverter have made some progress. These methods mainly include using an independent data communication and interaction device (such as a data stick and a communication box) and a built-in data interaction chip of the device, using a display screen or an indicator, and a similar manner. These technologies meet basic data communication and interaction requirements of energy devices to some extent.

However, existing technical solutions still have some obvious disadvantages. First, most of these methods depend on power supply, and consequently cannot be used when a device is powered off, which limits application of these methods in an emergency situation. Second, a communication and interaction process usually consumes a long time, which is a great challenge to an application scenario that requires real-time monitoring and control. In addition, many methods further require that a user has to use a specific APP or website for data access, which not only increases operation complexity of the user, but also limits flexibility and convenience of data access. Finally, an amount of information that can be provided in a manner of displaying data by using a display screen, an indicator, or the like is limited, which cannot meet a requirement for visual presentation and analysis of a large amount of data.

### TECHNICAL PROBLEMS

An objective of embodiments of this application is to provide a short-range passive data communication method and system for a device, a storage medium, and the device. A short-range passive communication module can obtain energy from a radio frequency field of a reader/writer, thus requiring no external power and achieving true passive communication. Moreover, because data is directly read from a memory and transmitted to the reader/writer, the communication speed is relatively fast. In addition, users can read data only by a standard reader/writer, without needing to install a specific APP or visit a specific website.

### TECHNICAL SOLUTIONS

According to an aspect of this application, a short-range passive data communication method for a device is provided, where the method includes:
configuring a short-range passive communication apparatus for a target device, where the short-range passive communication apparatus includes a memory and a short-range passive communication module;
monitoring, based on working data of the target device, whether the target device meets a preset short-range storage condition;
storing, when it is detected that the preset short-range storage condition is met, the working data into the memory; and
when the short-range passive communication module is scanned by a corresponding reader/writer, obtaining, by the short-range passive communication module, energy from a radio frequency field emitted by the reader/writer, and transmitting, by using the obtained energy, data stored in the memory to the reader/writer.

According to another aspect of this application, a short-range passive data communication system is provided, where the system includes:
a target device provided with a short-range passive communication apparatus; and a reader/writer, where the short-range passive communication apparatus includes a memory and a short-range passive communication module;
the target device is configured to: monitor, based on working data of the target device, whether the target device meets a preset short-range storage condition; and store, when it is detected that the preset short-range storage condition is met, the working data into the memory;
the reader/writer is configured to scan the short-range passive communication module; and
the short-range passive communication module is configured to: when being scanned by the corresponding reader/writer, obtain energy from a radio frequency field emitted by the reader/writer, and transmit, by using the obtained energy, data stored in the memory to the reader/writer.

According to still another aspect of this application, a storage medium is provided, where the storage medium stores a computer program, and the program is executed by a processor to implement the foregoing short-range passive data communication method for a device.

According to yet another aspect of this application, a device is provided, where the device is provided with a short-range passive communication apparatus, the short-range passive communication apparatus includes a memory and a short-range passive communication module, and the device is configured to implement the foregoing short-range passive data communication method for a device.

With the foregoing technical solutions, the embodiments of this application provide the short-range passive data communication method and system for device, the storage medium, and the device. A short-range passive communication apparatus is configured for a target device, so that when a preset short-range storage condition is met, working data of the target device is stored into the memory of the short-range passive communication apparatus. In this way, when a short-range passive communication module in the short-range passive communication apparatus is scanned by a reader/writer, it obtains energy from a radio frequency field emitted by the reader/writer, and uses the obtained energy to transmit the data stored in the memory to the reader/writer. In this application, the short-range passive communication module can obtain energy from the radio frequency field of the reader/writer, thus requiring no external power and achieving true passive communication. Moreover, because data is directly read from the memory and transmitted to the reader/writer, the communication speed is relatively fast. In addition, users can read data only by a standard reader/writer, without needing to install a specific APP or visit a specific website.

### BRIEF DESCRIPTION OF DRAWINGS

To describe the technical solutions in embodiments of this application more clearly, the following briefly describes the accompanying drawings that need to be used in the embodiments or exemplary technical descriptions. Clearly, the accompanying drawings in the following descriptions show merely some embodiments of this application, and a person of ordinary skill in the art may still derive other drawings from these accompanying drawings without creative efforts.

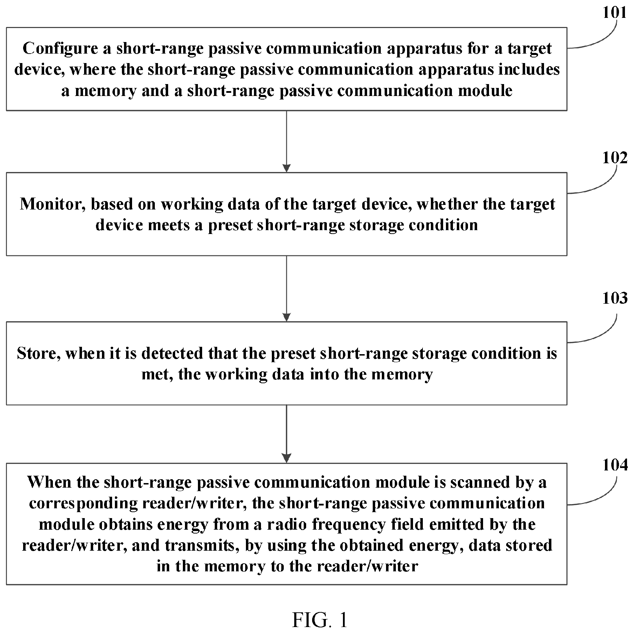

FIG. 1 is a schematic flowchart of a short-range passive data communication method for a device according to an embodiment of this application.

### IMPLEMENTATIONS OF THE PRESENT INVENTION

To make the objectives, technical solutions, and advantages of this application clearer, the following further describes this application in detail with reference to the accompanying drawings and embodiments. It should be understood that specific embodiments described herein are merely used to explain this application, but are not intended to limit this application.

It should be noted that when a component is referred to as being "fastened to" or "disposed on" another component, the component may be directly or indirectly on the another component. When a component is referred to as being "connected to" another component, the component may be directly or indirectly connected to the another component. An orientation or a positional relationship indicated by terms such as "up", "down", "left", and "right" is an orientation or a positional relationship shown based on the accompanying drawings, and is merely intended for ease of description, rather than indicating or implying that the apparatus or element indicated must have a specific orientation or be constructed and operated in a specific orientation, and therefore should not be understood as a limitation on this application. A person of ordinary skill in the art can understand specific meanings of the foregoing terms based on an actual situation. Terms "first" and "second" are merely intended for ease of description, and should not be understood as indicating or implying relative importance or implicitly indicating a quantity of technical features. "A plurality of" means two or more, unless otherwise specifically defined.

To describe the technical solutions provided in this application, the following provides detailed description with reference to specific accompanying drawings and embodiments.

An embodiment provides a short-range passive data communication method for a device. As shown in FIG. 1, the method includes:
Step 101: Configure a short-range passive communication apparatus for a target device, where the short-range passive communication apparatus includes a memory and a short-range passive communication module.
Step 102: Monitor, based on working data of the target device, whether the target device meets a preset short-range storage condition.
Step 103: Store, when it is detected that the preset short-range storage condition is met, the working data into the memory.
Step 104: When the short-range passive communication module is scanned by a corresponding reader/writer, the short-range passive communication module obtains energy from a radio frequency field emitted by the reader/writer, and transmits, by using the obtained energy, data stored in the memory to the reader/writer.

In view of disadvantages that existing energy devices such as a photovoltaic inverter and a photovoltaic hybrid energy storage inverter have in data communication and interaction, an embodiment of this application provides a short-range passive data communication method for a device. The method is intended to provide a new data communication solution that requires no power supply, provides a high communication speed, requires no support from a specific APP or website, and can transmit more data content. First, a short-range passive communication apparatus is configured for a device that needs to perform passive communication. The short-range passive communication apparatus includes two main parts: a memory, configured to store working data of a target device, where the memory has sufficient capacity to store important data that the device needs to record under a specific condition; and a short-range passive communication module, where the module is responsible for communicating with a reader/writer without requiring an external power supply; and the module can obtain energy from a radio frequency field emitted by the reader/writer and transmit data from the memory to the reader/writer by using the energy.

Specifically, first, the short-range passive communication apparatus is mounted on the target device. It is ensured that the short-range passive communication apparatus is connected to working data of the target device, so as to obtain and store data in real time. Then, a series of preset short-range storage conditions are set according to a working characteristic and a requirement of the target device. These conditions may include a running status, an environment parameter, a fault alarm, and the like of the device. A built-in program of the target device is used to monitor, in real time, whether these preset conditions are met. When detecting that a preset short-range storage condition is met, the short-range passive communication apparatus automatically obtains working data from the target device, and stores the working data in the memory, so as to ensure that data is recorded only when required, thereby saving storage space and resources. Finally, when the short-range passive communication module is scanned by a corresponding reader/writer, the short-range passive communication module obtains energy from the radio frequency field emitted by the reader/writer. By using the energy, the short-range passive communication module is activated, and transmits the data stored in the memory to the reader/writer. The reader/writer may then upload the data to a computer or a cloud server for further analysis and processing.

According to the technical solution in this embodiment, a short-range passive communication apparatus is configured for a target device, so that when a preset short-range storage condition is met, working data of the target device is stored into the memory of the short-range passive communication apparatus. In this way, when a short-range passive communication module in the short-range passive communication apparatus is scanned by a reader/writer, it obtains energy from a radio frequency field emitted by the reader/writer, and uses the obtained energy to transmit the data stored in the memory to the reader/writer. In this application, the short-range passive communication module can obtain energy from the radio frequency field of the reader/writer, thus requiring no external power and achieving true passive communication. Moreover, because data is directly read from the memory and transmitted to the reader/writer, the communication speed is relatively fast. In addition, users can read data only by a standard reader/writer, without needing to install a specific APP or visit a specific website.

In this embodiment of this application, optionally, the short-range passive communication module includes an NFC module.

In this embodiment, the short-range passive communication module may be specifically an NFC (Near Field Communication, near field communication) module. The NFC module is a passive communication technology. The NFC module can obtain energy from the radio frequency field emitted by the reader/writer, and therefore no additional power supply is required. This characteristic enables the NFC module to have a significant advantage in an energy-constrained environment, for example, in devices such as a photovoltaic inverter and a photovoltaic hybrid energy storage inverter. A communication distance of the NFC module is usually within a few centimeters. This short-range communication characteristic ensures security and privacy of data exchange. The NFC module is more applicable to situations in which data needs to be protected from long-distance theft or interference. The NFC technology has extremely high security because of the short-range communication characteristic and built-in encryption mechanism of the NFC technology. This ensures that the NFC module can provide effective security guarantee when transmitting sensitive data such as a device status and fault information. In addition, the NFC module has a small volume, and is easily integrated into various devices. For energy devices such as a photovoltaic inverter and a photovoltaic hybrid energy storage inverter, integration of the NFC module does not significantly affect overall structures and performance of the energy devices. When the target device meets the preset short-range storage condition, the NFC module stores the working data in the memory. Then, when the reader/writer approaches and scans the NFC module, the NFC module obtains energy from a radio frequency field emitted by the reader/writer, and transmits the data in the memory to the reader/writer.

In this embodiment of this application, optionally, the target device is an inverter, and the short-range passive communication apparatus is integrated into the inverter.

In this embodiment, the target device may be specifically an inverter, and the short-range passive communication apparatus is integrated into the inverter. The inverter is a key device in a photovoltaic power generation system and an energy storage system, and is responsible for converting a direct current into an alternating current, so as to be used by a home, an enterprise, or a power grid. Therefore, the working status and data of the inverter are essential to the overall performance and efficiency of the system. The inverter generates a large amount of working data during running, including an input voltage, an output voltage, a current, a power factor, fault information, and the like, which are conducive to monitoring, troubleshooting, and optimized running of the system. The inverter generally has a compact structure and limited space. Integrating the short-range passive communication apparatus into the inverter may make full use of the internal space of the inverter, thereby avoiding inconvenience and additional costs brought by an external additional device. In addition, integrating the short-range passive communication apparatus into the inverter can ensure real-time collection and storage of working data. When data needs to be read, only a standard NFC reader/writer needs to be used near the inverter, without requiring an additional data synchronization or transmission step. Certainly, the short-range passive communication module may alternatively be disposed independently of the inverter, which is not limited herein.

In this embodiment of this application, optionally, the short-range passive communication apparatus is packaged in an interaction device of the inverter.

In this embodiment, the interaction device of the inverter generally refers to a component on the inverter that is configured to perform data exchange and information display with a user or an external system. These devices may include a display screen, an indicator, a button, an interface, and the like, are configured to display information such as a working status, a parameter setting, and a fault alarm of the inverter, and allow the user or the external system to control and configure the inverter. Packaging the short-range passive communication apparatus in the interaction device of the inverter may further improve an integration level of the inverter. This not only reduces a quantity of external additional devices, but also makes the inverter more compact and beautiful as a whole, and reduces complexity of mounting and maintenance. In addition, the short-range passive communication apparatus packaged in the interaction device may more conveniently exchange data with an external system. For example, when a technician uses an NFC reader/writer near the interaction device of the inverter, the NFC reader/writer can immediately read the working data and fault information of the inverter without opening a housing of the inverter or connecting an additional data line. For a user, packaging the short-range passive communication apparatus in the interaction device may provide a more visual and convenient data access manner. The user only needs to use a smartphone or another device that has an NFC function to gently touch the interaction device of the inverter, so as to obtain required data and information without requiring a complex operation or an additional tool. In addition, the short-range passive communication apparatus packaged in the interaction device of the inverter may be better protected and isolated, thereby reducing a risk of suffering external interference or destruction. In addition, the NFC technology itself has extremely high security and reliability, and can ensure data integrity and confidentiality.

In this embodiment of this application, optionally, the preset short-range storage condition includes at least one of the following: initial power-on of the target device, a change in a setting quantity of the target device, a fault of the target device, an alarm of the target device, a change in a status of an optional device of the target device, and an abnormality of an optional device of the target device, where the optional device of the target device includes a smart meter and a battery; and the storing, when it is detected that the preset short-range storage condition is met, the working data into the memory includes at least one of the following: when the initial power-on of the target device is detected, storing a device serial number of the target device and a default setting quantity of the target device in the memory; when the change in the setting quantity of the target device is detected, updating an original setting quantity of the target device in the memory based on a changed setting quantity; when the fault or the alarm of the target device is detected, storing fault information or alarm information of the target device in the memory; when the change in the status of the optional device of the target device is detected, updating original status information of the optional device of the target device in the memory based on changed status information of the optional device; and when the abnormality of the optional device of the target device is detected, storing abnormality information of the optional device of the target device in the memory.

In this embodiment, the preset short-range storage condition includes at least one case of initial power-on, a change in a setting quantity, a fault, an alarm, a change in a status of an optional device, an abnormality of an optional device, and the like of the target device. When the target device (such as the inverter) is powered on for the first time, a device serial number and a default setting quantity of the target device are stored in the memory, which helps quickly identify an identity and an initial configuration of the device during subsequent maintenance or troubleshooting. When the setting quantity (for example, parameters such as a voltage, a current, and a power) of the target device changes, the original setting quantity in the memory is updated based on the changed setting quantity, so as to ensure that the latest device configuration information is always stored in the memory. When a fault or an alarm occurs on the target device, fault information or alarm information is stored in the memory. This helps a technician quickly locate a cause of a problem and take a corresponding repair measure. The change in the status of the optional device (such as the smart meter and the battery) is essential to the overall performance and stability of the target device. Therefore, when it is detected that the status of the optional device changes, the original status information of the optional device in the memory is updated based on changed status information of the optional device. When the optional device is abnormal, abnormality information is stored in the memory. This helps detect and handle a potential problem of the optional device in a timely manner, and prevent the potential problem from affecting normal running of the target device. When it is detected that the foregoing preset short-range storage condition is met, the working data is stored into the memory. This process includes but is not limited to: storing a device serial number and a default setting quantity when the target device is initially powered on; updating the setting quantity in the memory when the setting quantity changes; storing fault information or alarm information when a fault or an alarm occurs; updating the status information in the memory when the status of the optional device changes; and storing abnormality information when the optional device is abnormal. It should be noted that the memory may be a non-volatile memory, so as to ensure that data is not lost in the case of power failure. In an actual implementation, the preset short-range storage condition may be extended or adjusted according to a specific requirement, so as to meet requirements of different application scenarios.

In this embodiment of this application, optionally, the storing, when it is detected that the preset short-range storage condition is met, the working data into the memory includes: when it is detected that the preset short-range storage condition is met, storing, based on a data type of the working data, working data of different data types in logical blocks corresponding to the data types in the memory; and the transmitting, by using the obtained energy, data stored in the memory to the reader/writer includes: receiving a target physical address transmitted by the reader/writer, and transmitting, by using the obtained energy, data stored in a logical block corresponding to the target physical address to the reader/writer.

In this embodiment, when it is detected that the preset short-range storage condition is met, the working data is stored, based on the data type of the working data, in a logical block corresponding to the data type in the memory. This manner of storage by classification helps improve orderliness and manageability of data storage, and facilitates subsequent data reading and parsing. Specifically, different types of working data (such as a device serial number, a setting quantity, fault information, alarm information, and status information of an optional device) are allocated to different logical blocks for storage. These logical blocks are arranged and organized in the memory according to a specific rule, so that required data can be quickly located and accessed. In terms of data transmission, when the reader/writer approaches and attempts to read data, the reader/writer first transmits a target physical address to the memory. Then, the memory transmits, to the reader/writer by using energy obtained from the reader/writer (for example, energy of a radio frequency field in the NFC technology), data stored in a logical block corresponding to the target physical address. This data transmission manner has the following advantages: By directly accessing a logical block corresponding to a target physical address, the system can quickly find and transmit required data, thereby reducing unnecessary data transmission and waiting time. Because data transmission is performed based on a physical address, the system can flexibly select which data to read without a need to transmit data of the entire memory each time.

In this embodiment of this application, optionally, the physical address is a physical address of a logical block corresponding to a target data type selected in a data type selection interface of an electronic device in which the reader/writer is located, and the data type selection interface is displayed when a short-range passive communication function is enabled in the electronic device.

In this embodiment, when an electronic device (such as a smartphone or a tablet computer) in which the reader/writer is located enables a short-range passive communication function (such as NFC), a data type selection interface is displayed. This interface allows users to select, from a plurality of available data types, target data types they want to read or write. Each selected target data type corresponds to one logical block in the memory, and each logical block has one unique physical address. In the data type selection interface, after a user selects a target data type, the system determines a physical address of a corresponding logical block based on this selection. Once the physical address is determined, the reader/writer can communicate with the memory by using the short-range passive communication technology (such as NFC). The reader/writer sends, to the memory, a request that includes a target physical address, and then the memory transmits data in a corresponding logical block to the reader/writer based on the request. Through the data type selection interface, users can visually select the data types they want to read or write, thereby improving user friendliness of the system. The system may flexibly select, according to a requirement of a user, a data type to read or write, without a need to transmit data of the entire memory each time.

Further, in a specific implementation of the method in FIG. 1, an embodiment of this application provides a short-range passive data communication system for a device, where the system includes:
a target device provided with a short-range passive communication apparatus; and a reader/writer, where the short-range passive communication apparatus includes a memory and a short-range passive communication module;
the target device is configured to: monitor, based on working data of the target device, whether the target device meets a preset short-range storage condition; and store, when it is detected that the preset short-range storage condition is met, the working data into the memory;
the reader/writer is configured to scan the short-range passive communication module; and
the short-range passive communication module is configured to: when being scanned by the corresponding reader/writer, obtain energy from a radio frequency field emitted by the reader/writer, and transmit, by using the obtained energy, data stored in the memory to the reader/writer.

It should be noted that, for other corresponding descriptions of functional units related to the short-range passive data communication system for a device provided in this embodiment of this application, refer to the corresponding description in the method in FIG. 1. Details are not described herein again.

An embodiment of this application further provides a device, where the device is provided with a short-range passive communication apparatus, the short-range passive communication apparatus includes a memory and a short-range passive communication module, and the device is configured to implement the foregoing short-range passive data communication method for a device.

An embodiment provides a computer-readable storage medium, where the computer-readable storage medium may be a non-volatile or volatile storage medium, and stores a computer program, and the computer program is executed by a processor to implement the steps in the foregoing method embodiments.

An embodiment provides a computer program product, including a computer program, where the computer program is executed by a processor to implement the steps in the foregoing method embodiments.

It should be noted that user information (including but not limited to user equipment information and user personal information) and data (including but not limited to data used for analysis, stored data, and displayed data) involved in this application are all information and data that are authorized by the user or that are fully authorized by each party.

A person of ordinary skill in the art may understand that all or some of the processes of the method in the foregoing embodiments may be implemented by a computer program instructing related hardware. The computer program may be stored in a non-volatile computer-readable storage medium. When the computer program is executed, the processes in the foregoing method embodiments may be included. Any reference to the memory, the database, or another medium used in the embodiments provided in this application may include at least one of a non-volatile memory and a volatile memory. The non-volatile memory may include a read-only memory (Read-Only Memory, ROM), a magnetic tape, a floppy disk, a flash memory, an optical memory, a high-density embedded non-volatile memory, a resistive random access memory (ReRAM), a magnetoresistive random access memory (Magnetoresistive Random Access Memory, MRAM), a ferroelectric random access memory (Ferroelectric Random Access Memory, FRAM), a phase change memory (Phase Change Memory, PCM), a graphene memory, or the like. The volatile memory may include a random access memory (Random Access Memory, RAM), an external cache, or the like. As an illustration and not a limitation, the RAM may be in a plurality of forms, such as a static random access memory (Static Random Access Memory, SRAM) or a dynamic random access memory (Dynamic Random Access Memory, DRAM). The database used in the embodiments provided in this application may include at least one of a relational database and a non-relational database. The non-relational database may include a blockchain-based distributed database or the like, and is not limited thereto. The processor used in the embodiments provided in this application may be a general-purpose processor, a graphics processing unit, a digital signal processor, a programmable logic device, a quantum computing-based data processing logic device, or the like, and is not limited thereto.

The foregoing descriptions are merely optional embodiments of this application, and are not intended to limit this application. A person skilled in the art may make various changes and variations to this application. Any modification, equivalent replacement, improvement, and the like made within the spirit and principle of this application shall be included in the scope of the claims of this application.

## Claims

1. A short-range passive data communication method for a device, wherein the method comprises:
configuring a short-range passive communication apparatus for a target device, wherein the short-range passive communication apparatus comprises a memory and a short-range passive communication module;
monitoring, based on working data of the target device, whether the target device meets a preset short-range storage condition;
storing, when it is detected that the preset short-range storage condition is met, the working data into the memory; and
when the short-range passive communication module is scanned by a corresponding reader/writer, obtaining, by the short-range passive communication module, energy from a radio frequency field emitted by the reader/writer, and transmitting, by using the obtained energy, data stored in the memory to the reader/writer.

2. The method according to claim 1, wherein the short-range passive communication module comprises an NFC module.

3. The method according to claim 1, wherein the target device is an inverter, and the short-range passive communication apparatus is integrated into the inverter.

4. The method according to claim 3, wherein the short-range passive communication apparatus is packaged in an interaction device of the inverter.

5. The method according to any one of claims 1 to 3, wherein the preset short-range storage condition comprises at least one of the following: initial power-on of the target device, a change in a setting quantity of the target device, a fault of the target device, an alarm of the target device, a change in a status of an optional device of the target device, and an abnormality of an optional device of the target device, wherein the optional device of the target device comprises a smart meter and a battery; and
the storing, when it is detected that the preset short-range storage condition is met, the working data into the memory comprises at least one of the following:
when the initial power-on of the target device is detected, storing a device serial number of the target device and a default setting quantity of the target device in the memory;
when the change in the setting quantity of the target device is detected, updating an original setting quantity of the target device in the memory based on a changed setting quantity;
when the fault or the alarm of the target device is detected, storing fault information or alarm information of the target device in the memory;
when the change in the status of the optional device of the target device is detected, updating original status information of the optional device of the target device in the memory based on changed status information of the optional device; and
when the abnormality of the optional device of the target device is detected, storing abnormality information of the optional device of the target device in the memory.

6. The method according to claim 5, wherein the storing, when it is detected that the preset short-range storage condition is met, the working data into the memory comprises:
when it is detected that the preset short-range storage condition is met, storing, based on a data type of the working data, working data of different data types in logical blocks corresponding to the data types in the memory; and
the transmitting, by using the obtained energy, data stored in the memory to the reader/writer comprises:
receiving a target physical address transmitted by the reader/writer, and transmitting, by using the obtained energy, data stored in a logical block corresponding to the target physical address to the reader/writer.

7. The method according to claim 6, wherein the physical address is a physical address of a logical block corresponding to a target data type selected in a data type selection interface of an electronic device in which the reader/writer is located, and the data type selection interface is displayed when a short-range passive communication function is enabled in the electronic device.

8. A short-range passive data communication system, wherein the system comprises:
a target device provided with a short-range passive communication apparatus; and a reader/writer, wherein the short-range passive communication apparatus comprises a memory and a short-range passive communication module;
the target device is configured to: monitor, based on working data of the target device, whether the target device meets a preset short-range storage condition; and store, when it is detected that the preset short-range storage condition is met, the working data into the memory;
the reader/writer is configured to scan the short-range passive communication module; and
the short-range passive communication module is configured to: when being scanned by the corresponding reader/writer, obtain energy from a radio frequency field emitted by the reader/writer, and transmit, by using the obtained energy, data stored in the memory to the reader/writer.

9. A storage medium having a computer program stored thereon, wherein the computer program is executed by a processor to implement the method according to any one of claims 1 to 7.

10. A device, wherein the device is provided with a short-range passive communication apparatus, the short-range passive communication apparatus comprises a memory and a short-range passive communication module, and the device is configured to implement the method according to any one of claims 1 to 7.
